(19) Europäisches Patentamt
European Patent Office
Office européen des brevets

(11) **EP 1 102 056 A1**

(12) **EUROPEAN PATENT APPLICATION**
published in accordance with Art. 158(3) EPC

(43) Date of publication:
**23.05.2001 Bulletin 2001/21**

(51) Int. Cl.$^7$: **G01N 17/00**, H02G 1/02

(21) Application number: **00931635.7**

(86) International application number:
**PCT/JP00/03540**

(22) Date of filing: **01.06.2000**

(87) International publication number:
**WO 00/75629 (14.12.2000 Gazette 2000/50)**

(84) Designated Contracting States:
**AT BE CH CY DE DK ES FI FR GB GR IE IT LI LU MC NL PT SE**
Designated Extension States:
**AL LT LV MK RO SI**

(30) Priority: **02.06.1999 JP 15569899**

(71) Applicant:
**The Tokyo Electric Power Co., Inc.
Tokyo 100-0011 (JP)**

(72) Inventors:
• **KITAMURA, Satoshi
Yokohama-shi, Kanagawa 230-0002 (JP)**
• **ISOZAKI, Masanori
Yokohama-shi, Kanagawa 230-0002 (JP)**
• **HAJI, Hirotaka
Yokohama-shi, Kanagawa 230-0002 (JP)**

(74) Representative:
**Cross, Rupert Edward Blount et al
BOULT WADE TENNANT,
Verulam Gardens
70 Gray's Inn Road
London WC1X 8BT (GB)**

(54) **THERMAL PROOF STRENGTH DETERMINATION METHOD OF POWER-TRANSMISSION LINE**

(57) Samples of electric wire from an operational power transmission line are prepared and the samples are subjected to a heat history process at a plurality of temperatures to determine a correlation between electric wire temperature, heating time, and valuation basis of residual strength, followed by determining an operating temperature of the electric wire of the operational power transmission line based on the correlation. For determining the above correlation, it is preferred to first determine a relation between the valuation basis of residual strength and the plurality of temperatures, and then based on the result thereof determine each of constants A, B and C in "the heat history exp $\{A \cdot T - B + C \cdot \ln(h)\}$" so that the relation between said heat history exp $\{A \cdot T - B + C \cdot \ln(h)\}$ and said valuation basis of residual strength becomes linear, where T represents electric wire temperature (°C) and h represents heating time (hrs). The present method allows the thermal strength of power transmission lines to be determined more accurately according to conditions associated with such power transmission lines.

**EP 1 102 056 A1**

## Description

Technical Field

This invention relates to a method of determining a thermal resistance of electric power transmission lines.

Background Technology

Heretofore, the thermal resistance, i.e., maximum allowable operating temperature, of overhead power transmission lines has been determined based on the thermal degradation properties of wire materials of such power transmission lines.

For example, in hard aluminum stranded wires (HA1), it is determined in the manner as described below.

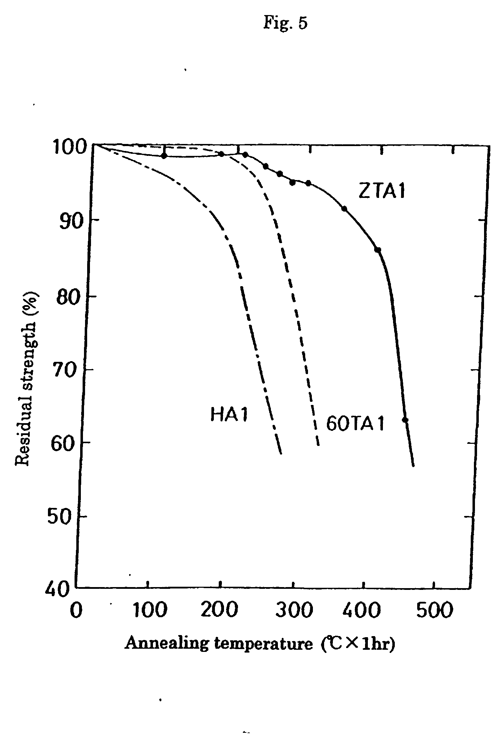

First, aluminum alloy wire samples constituting a power transmission line is annealed at varied temperature for 1 hour, plotting their tensile strengths against temperature settings into a graph (see Fig. 5).

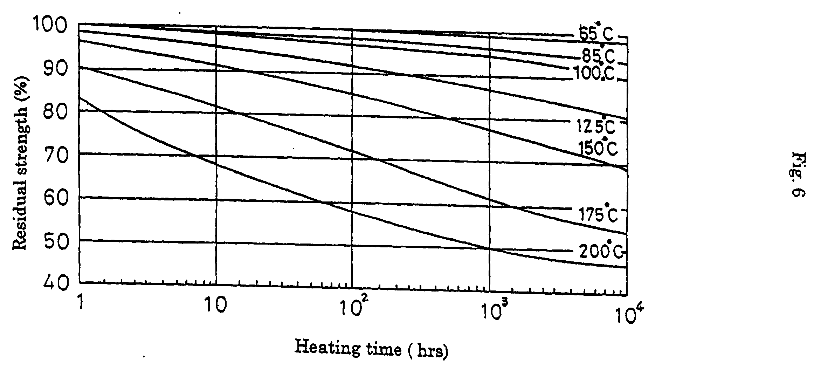

Then, the aluminum alloy wire samples are subjected to heat history processes by using varied heating times at certain temperature settings, plotting their tensile strength against heating time into a graph (see Fig. 6). In these graphs, the "residual strength" denotes a ratio of the tensile strength of each tested sample to that of a non-heated wire sample.

Here, with a useful life of the aluminum alloy wire defined as the temperature and heating time at which its tensile strength reaches 90% in residual strength, are made into a life, the heating temperature and heating time causing the tensile strength to reach 90% in residual strength are determined on the graphs of Fig. 5 and 6.

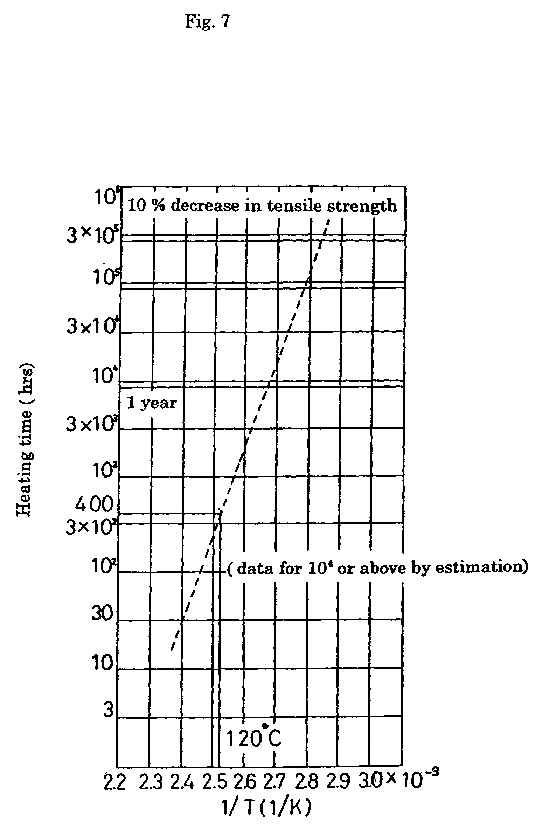

Applying Arrhenius's equation $(\ln(t) \propto \ln(1/T)$ t: heating time (hr) T: heating temperature (k)) to the thus determined two parameters will yield an Arrhenius diagram as shown by the graph of Fig. 7.

This diagram is used to derive an allowable operating temperature of an electric wire at a desired or selected useful life, showing that in the illustrated example the electric wire should have a maximum allowable temperature of about 80 °C for the useful life time of 36 years.

However, such a technique as described above determines the thermal resistance of power transmission wires substantially based on new fresh samples, not necessarily allowing the wires to be evaluated for their thermal resistance in consideration of transmission conditions and/or meteorological conditions of a power transmission line.

Therefore, this determining method allows for a substantial safety factor with estimated environmental conditions being uniformly set at the worst conditions including 40 °C air temperature, 0.5 m/sec. wind velocity, and 0.1 w/cm$^2$ amount of insolation. Conse-

quently, laid power transmission lines that could still withstand full normal use might have been evaluated as life-expired to be removed or replaced with new ones. Moreover, if the thermal resistance of any laid power transmission line is higher than a thermal resistance determined by the above-mentioned prior art technique, its power transmission capacity might be increased to transmit electric power more efficiently.

Accordingly, a primary object of the invention is to provide a method of determining a thermal resistance of a power transmission line more correctly and properly according to the situation of specific power transmission lines and systems.

Disclosure of the Invention

This invention has been accomplished with a view to attaining the above-mentioned object of the invention, and is characterized by comprising the steps of preparing samples of electric wire from an operational power transmission line, subjecting said samples to a heat history process at a plurality of temperatures to determine a correlation between electric wire temperature, heating time, and valuation basis of residual strength, and determining an operating temperature of the electric wire of the operational power transmission line based on said correlation.

In this regard, for determining the above correlation, it may be desirable to first determine a relation between the valuation basis of residual strength and the plurality of temperatures, and then based on the result thereof determine each of constants A, B and C in "the heat history exp $\{A \cdot T\text{-}B+C \cdot \ln (h)\}$" so that the relation between said heat history exp $\{A \cdot T\text{-}B+C \cdot \ln (h)\}$ and said valuation basis of residual strength becomes linear, where T represents electric wire temperature (°C) and h represents heating time (hrs).

Further, the valuation basis of residual strength may include tensile load, vibration fatigue limit stress, creep quantity, etc.
Specifically, it is preferred that the valuation basis of residual strength comprises at least the tensile load and vibration fatigue limit stress and to lowest of the operating temperatures determined based on the respective valuation is used as the operating temperature of operational transmission wire.

It is also preferred that the heat history temperatures comprise a plurality of temperatures having a 20% or greater difference of an allowable continuous temperature provided for by the overhead power transmission regulation (JEAC 6001-1993) with respect to a temperature 150% higher than that allowable continuous temperature.
Particularly, it is preferable to use three or more temperature settings to allow more accurate determination of thermal resistance.

The operating temperature might be determined in consideration of the environmental conditions of a power transmission line in the following manner. First, electric wire samples are prepared from an operational power transmission line, and the thus obtained samples are subjected to a heat history process at a plurality of temperatures to determine a correlation between electric wire temperature, heating time, and valuation basis of residual strength. Then, a target operating temperature is set, and distribution of electric wire temperatures at the maximum allowable current corresponding to the target temperature and of occurrence time of such electric wire temperatures are determined based on the meteorological conditions of the operational power transmission line.

Subsequently, based on the resultant distribution and the above-mentioned correlation, degradation in the valuation basis of residual strength at each temperature is derived, and it is determined, based on accumulated degradation levels at all temperatures, whether the operational power transmission line may be used at that target temperature. With such a determining method as described above, an optimum allowable operating temperature may be determined according to environmental conditions of each operational transmission line.

Brief Description of the Drawings

Fig. 1 is a graph showing a relation between heating time and percentage reduction in strength in the heat history observed on samples prepared from dismounted electric wires.

Fig. 2 is a graph showing a linear correlation obtained based on the electric wire temperature, heating time, and the tensile strength properties given on the graph of Fig. 1.

Fig. 3 is a graph showing a relation between electric wire temperatures and occurrence time thereof.

Fig. 4 is a graph showing a relation between normal power transmission capacity and percentage residual strength.

Fig. 5 is a graph showing a relation between annealing temperature and tensile strength.

Fig. 6 is a graph showing a relation between heating time and tensile strength.

Fig. 7 is a graph of Arrhenius diagram showing a relation between temperature and annealing time.

Best Mode for Carrying out the Invention

In this example, samples were prepared from electric wires dismounted from a power transmission line (ACSR) after being actually laid for a period of 34 years, and tests were made to determine whether the samples could be safely operated even when their power transmission capacity was increased by 119% over the past settings, while determining the most efficient power transmission capacity (maximum allowable operating temperature).

A 100% power transmission capacity herein referred to denotes a power transmission capacity corresponding to a maximum operating temperature by the prior art method as described previously. In determining thermal resistance, tensile strength was selected as the residual strength valuation basis.

(Strength properties of sample)

First, samples were prepared from dismounted electric wires, and aluminum wire samples were obtained by separating out steel wires from the dismounted wires, and the resultant aluminum wire samples of 3.8 mm $\phi$ were subjected to a heat history process to determine the tensile strength and to determine changes in strength properties of the samples during the process.

In the heat history process, heating temperatures were set at five levels of 100, 120, 140, 160 and 180 °C, which were kept over five heating time intervals of 50, 100, 200, 400 and 800 hours, respectively. For the temperature settings, the strength properties may be determined more accurately by using a plurality of temperatures having a 20% or greater difference of an allowable continuous temperature provided for by the overhead power transmission regulation (JEAC 6001-1993) with respect to a temperature 150% higher than that allowable continuous temperature. In this example, the above-mentioned continuous allowable temperature of ACSR was 90 °C.

Although it is preferable to use a longer heating time, about 1000 hours or shorter heating time is practically preferred in view of temperature management of a heating furnace and the like considerations.

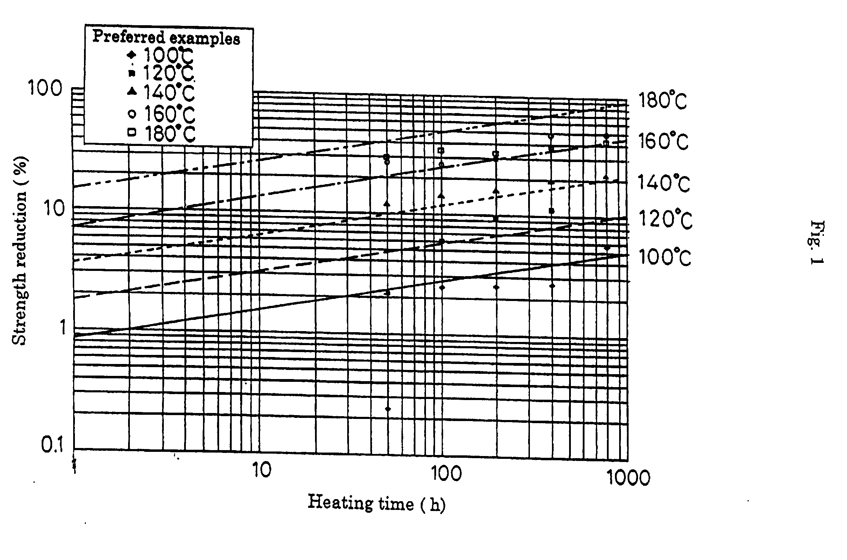

The resultant strength properties are shown on the graph of Fig. 1. The "percentage reduction" on the ordinate denotes a ratio of 100 x (strength before heating — strength after heating)/ strength after heating.

(Preparation of graphs of correlation among electric wire temperature, heating time, and the tensile strength properties)

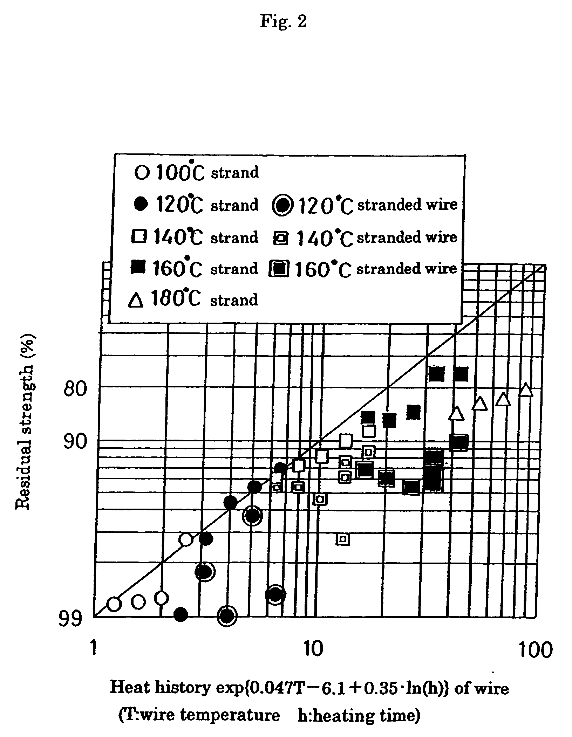

Then, a graph showing a correlation among electric wire temperature, heating time, and the tensile strength properties were prepared based on the graph of Fig. 1 (see Fig. 2).

Here, the "residual strength" is plotted on the ordinate with the abscissa plotting heat history exp

{A • T- B+C • ln (h)} , and the constants A, B and C are determined so that the relation between the heat history exp {A • T- B+C • ln (h)} and the valuation basis of residual strength becomes linear, where T represents electric wire temperature (°C) and h represents heating time (hrs)".

The "percentage residual strength" denotes a ratio in percentage of the strength before heating and the strength after heating and in other words may denote "100 - percentage reduction".

In this example, the constants were selected as A = 0.047, B = 6.1, and C = 0.35. In this connection, the percentage residual strength in the graph of Fig. 2 is not percentage residual strength of aluminum wire samples themselves, but is given after being converted into corresponding values of stranded wires.

The conversion is accomplished by multiplying percentage residual strength of aluminum wire sample by X/(X+Y), where X represents a strength of aluminium wires constituting ACSR without being subjected to heat history, Y representing a corresponding strength of steel wires.

Since a correlation of electric wire temperature, heating time, and tensile-strength properties may be derived from above, assigning selected or desired temperature and time values in the formula "exp {0.047 • T- 6.1+0.35 • ln (h)}" will yield a percentage residual strength under the relevant conditions from the graph of Fig. 2. Further, for example, with a threshold of 90% residual strength and 36 years (315360 hours) useful life, a maximum allowable operating temperature under these conditions can be determined.

(Distribution estimation of electric wire temperatures considering environmental conditions of operational power transmission lines and occurrence of such wire temperatures)

Although in the above-mentioned technique the allowable operating temperature is determined also by considering the thermal degradation conditions of specific transmission lines subjected to a heat history process, electric wire temperature does not always reach the maximum operating temperature during the whole continuous period of operation. Therefore, it is more preferable to determine the thermal resistance by more correctly taking account of the environmental conditions in the following manner.

First, a target operating temperature (here 105 °C) is set and a maximum allowable current capacity (119% of the past settings) is determined at that temperature, and a distribution of electric wire temperatures during current conduction and occurrence time of such temperatures is estimated.

In this connection, it is necessary to take account of meteorological data (temperature, wind velocity, insolation) for the environments of the site where the power transmission line is to be laid.

Some prediction methods of such an electric wire temperature distribution are proposed, including, for example, "Institute of Electrical Engineers of Japan Technical Report", No. 660, 5-48 page, issued on December 5, 1997.

In this example, temperature distribution was determined for electric wires for a 34 years period on the basis of meteorological data for the past 30 years of a site of the power transmission line.

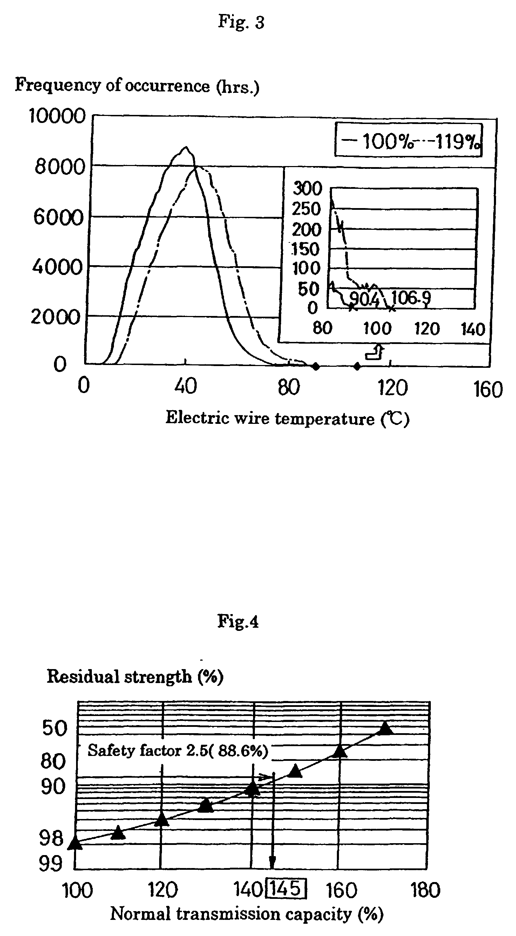

Such meteorological data is available from the observation data provided by a meteorological observatory. The resultant graph showing the electric wire temperature distribution is given in Fig. 3.

As shown on this graph, electric wires are exposed to temperatures of about 40 °C over the longest time period, while it turns out that the time period during which the wires are exposed to temperatures below 10 °C or above 80 °C is very short.

(Determination of power transmission capacity leading to optimum capacity operating ratio)

Since the graph of figure 3 shows electric wire temperatures and occurrence time thereof, each temperature (for example, in 1 °C increments) and its occurrence time are substituted into the formula "exp {0.047 • T- 6.1+0.35 • ln (h)}" to determine the residual strength at each temperature.

Further, by calculating percentage residual strengths for all temperatures and accumulating the percentage residual strengths for these all temperatures, final percentage residual strength can be determined.

If this final percentage residual strength satisfies the safety factor of 2.5 as specified by the "MITI ministerial ordinance providing technical standards for electric equipment ", it turns out that the electric power transmission wire may be operated at that target operating temperature.

Conversely, if a temperature as much close as possible to a temperature corresponding to the safety factor of 2.5 in a similar manner as described above, that temperature will be an allowable operating temperature of the overhead power transmission line giving the highest capacity operating ratio.

Furthermore, in this example, two or more target operating temperatures were set, and the distribution of electric wire temperatures at each allowable current and occurrence time of those temperatures was predicted in the aforementioned procedure to determine a relation between the allowable current capacity and the percentage residual strength (see Fig. 4).

As can be clearly understood from this graph, an allowable current capacity corresponding to the safety factor of 2.5 (88.6% residual strength) increases to 146%, and it turns out that power transmission at this current capacity results in optimum capacity operating ratio.

Of course, an allowable current capacity of 119 % as in the past was shown to well accommodate the safety factor of 2.5 of safety, and thus causing no operational problem.

Industrial Applicability

As fully described herein above, the present method of thermal resistance determination is useful for determining the thermal resistance according to specific power transmission lines by using electric wire samples prepared from operational power transmission lines after being subjected to a heat history process.

Particularly, the method of this invention is suited to predict a distribution of electric wire temperatures and occurrence time thereof by taking account of the environmental conditions of the operational power transmission lines, and to determine the thermal resistance also based on the result of prediction as well.

**Claims**

1. A method of determining a thermal resistance of power transmission line, comprising the steps of: preparing samples of electric wire from an operational power transmission line, subjecting said samples to a heat history process at a plurality of temperatures to determine a correlation between electric wire temperature, heating time, and valuation basis of residual strength, and determining an operating temperature of the electric wire of the operational power transmission line based on said correlation.

2. A method of claim 1, wherein said correlation is determined by first determining a relation between the valuation basis of residual strength and the plurality of temperatures, and then based on the result thereof determining each of constants A, B and C in "the heat history exp {A・T-B+C・ln (h)}" so that the relation between said heat history exp {A・T-B+C・ln (h)} and said valuation basis of residual strength becomes linear, where T represents electric wire temperature (°C) and h represents heating time (hrs).

3. A method of claim 1, wherein said valuation basis of residual strength comprises a tensile load.

4. A method of claim 1, wherein said valuation basis of residual strength comprises a vibration fatigue limit stress.

5. A method of claim 1, wherein said valuation basis of residual strength comprises at least the tensile load and vibration fatigue limit stress and the lowest of the operating temperatures determined based on the respective valuation bases is used as the operating temperature of operational transmission wire.

6. A method of claim 1, wherein said heat history temperatures comprise a plurality of temperatures having a 20% or greater difference of an allowable continuous temperature provided for by the overhead power transmission regulation with respect to a temperature 150% higher than that allowable continuous temperature.

7. A method of determining a thermal resistance of power transmission line, comprising the steps of:

preparing samples of electric wire from an operational power transmission line and subjecting said samples to a heat history process at a plurality of temperatures to determine a correlation between electric wire temperature, heating time, and valuation basis of residual strength;
setting a target operating temperature to determine distribution of electric wire temperatures at the maximum allowable current corresponding to the target temperature and of occurrence time of such electric wire temperatures based on the meteorological conditions of the operational power transmission line; and
deriving, based on the resultant distribution and said correlation, degradation in the valuation basis of residual strength at each temperature and determining, based on accumulated degradation levels at all temperatures, the operational power transmission line may be used at that target temperature.

Fig. 1

Fig. 2

Heat history exp{0.047T−6.1+0.35·ln(h)} of wire
(T:wire temperature   h:heating time)

## Fig. 3

Frequency of occurrence (hrs.)

Electric wire temperature (℃)

## Fig.4

Residual strength (%)

Normal transmission capacity (%)

Fig. 5

Fig. 6

Fig. 7

# INTERNATIONAL SEARCH REPORT

International application No.

PCT/JP00/03540

| A. CLASSIFICATION OF SUBJECT MATTER |
|---|
| Int.Cl⁷ G01N17/00 H02G 1/02 |
| According to International Patent Classification (IPC) or to both national classification and IPC |

| B. FIELDS SEARCHED |
|---|
| Minimum documentation searched (classification system followed by classification symbols) |
| Int.Cl⁷ G01N17/00-17/04 H02G 1/00- 1/16 G01N 3/00- 3/62 |

Documentation searched other than minimum documentation to the extent that such documents are included in the fields searched

| Jitsuyo Shinan Koho | 1922-1996 | Toroku Jitsuyo Shinan Koho | 1994-2000 |
| Kokai Jitsuyo Shinan Koho | 1971-2000 | Jitsuyo Shinan Toroku Koho | 1996-2000 |

Electronic data base consulted during the international search (name of data base and, where practicable, search terms used)
JICST FILE(JOIS)

## C. DOCUMENTS CONSIDERED TO BE RELEVANT

| Category* | Citation of document, with indication, where appropriate, of the relevant passages | Relevant to claim No. |
|---|---|---|
| P,A | JP, 11-344433, A (Mitsubishi Cable Industries, Ltd.), 14 December, 1999 (14.12.99), Full text; Figs. 1 to 4 (Family: none) | 1-7 |
| A | JP, 6-331523, A (The Kansai Electric Power Co., Inc.), 02 December, 1994 (02.12.94), Full text; Figs. 1 to 9 (Family: none) | 1-7 |
| A | EP, 442205, A (WESTINGHOUSE ELECTRIC CORPORATION), 21 August, 1991 (21.08.91), Full text; Fig. 1 & JP, 4-339242, A | 1-7 |
| A | JP, 63-134934, A (The Kansai Electric Power Co., Inc.), 07 June, 1988 (07.06.88), Full text; Figs. 1 to 12 (Family: none) | 1-7 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 August, 2000 (22.08.00) | 05 September, 2000 (05.09.00) |

| Name and mailing address of the ISA/ | Authorized officer |
|---|---|
| Japanese Patent Office | |
| Facsimile No. | Telephone No. |

Form PCT/ISA/210 (second sheet) (July 1992)